Europäisches Patentamt

European Patent Office

Office européen des brevets

(19)

(11) Publication number: **0 465 884 A1**

## EUROPEAN PATENT APPLICATION

(12)

(21) Application number: **91110067.5**

(22) Date of filing: **19.06.91**

(51) Int. Cl.5: **A23G 3/28**, A23G 3/00

(30) Priority: **07.07.90 JP 179927/90**

(43) Date of publication of application:
**15.01.92 Bulletin 92/03**

(84) Designated Contracting States:
**CH DE FR GB IT LI**

(71) Applicant: **HUNTER CONFECTIONERY CO.,
LTD.
6-14, Misaki-cho 3-chome
Chiyoda-ku, Tokyo(JP)**

(72) Inventor: **Yanagisawa, Kenji
8-18, Hirai 7-chome
Edogawa-ku, Tokyo(JP)**

(74) Representative: **Klingseisen, Franz, Dipl.-Ing.
et al
Dr. F. Zumstein sen. Dr. E. Assmann Dr. R.
Koenigsberger Dr. F. Zumstein jun. Dipl.-Ing.
F. Klingseisen Bräuhausstrasse 4
W-8000 München 2(DE)**

(54) Confection and its production.

(57) A three-dimensional configuration of an object such as a flower, an animal or the like which is intended to be formed into a confection is divided into plural configurational elements (2,3,4). Respective configurational elements have parts of the outside configuration of the object at the parts thereof. Respective configurational elements are separately formed by using confectionery material such as chocolate or the like which are easily formed. The formed configurational elements are combined to obtain a desired confectionery. The combined confectionery has a shape of a complicated and precise configuration which can not be obtained by an integral formation.

FIG. 1

## BACKGROUND OF THE INVENTION

### (1) Field of the Invention

The present invention relates to a confection and its production, particularly to a confection made of chocolate or the like.

### (2) Background Information

Chocolate has been formed by means of a mold made of a rigid material such as a metal or a polycarbonate resin. However, since a chocolate of a three-dimensional shape having an extending bottom cannot be pulled out from the mold, a complicated shape cannot be formed.

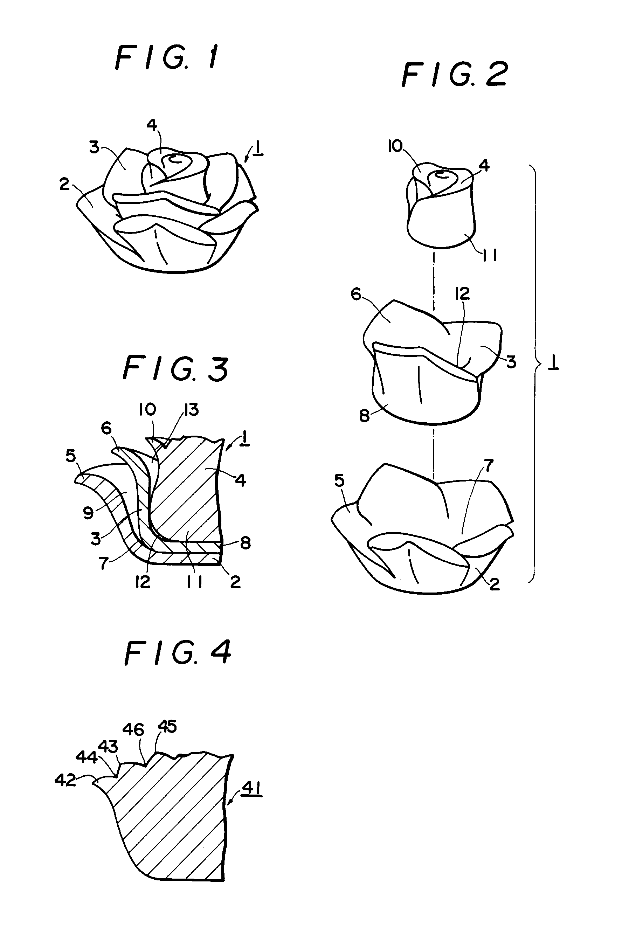

For this reason, the formation of the chocolate has been partially practiced by using a flexible mold of a silicone resin type, a rubber type of the like. However, since there is necessarily a restriction in forming a desired shape by means of one mold, a complicated and precise shape cannot be formed. For example, when a rose flower 41 is formed integrally as shown in Fig. 4, it is possible to form a petal 42 at the circumferential portion into a reverse-taper shape (extending bottom of the flower 41 in mold). However, it is impossible to form deeply a space 44 extending toward the lower portion between the petal 42 at the circumferential portion and an intermediate petal 43 at the inside thereof, a space 46 extending toward the lower portion between the intermediate petal 43 and a petal 45 at the inside thereof, and the like. Accordingly, the rose flower 41 tends to have a smooth and flat shape which is totally poor in cubicity.

## SUMMARY OF THE INVENTION

An object of the present invention is to provide a confection of a three-dimensional shape which is complicated, full of variety, and precise.

Another object of the present invention is to form a confection of a complicated three-dimensional shape by a forming method using a mold.

A further object of the present invention is to provide a confection of a three-dimensional shape whose joining portion is not seen from the outside.

Still another object of the present invention is to provide a novel production method wherein a confection is formed into a complicated and precise three-dimensional shape whose joining portion is not seen from the outside.

In the present invention, a confection of a three-dimensional shape which is complicated and full of variety can easily be obtained by dividing a configuration of an object to be formed, such as a flower, an animal or the like, into plural configurational elements, Each configurational element partially has a part of the outside configuration of the object, forming the configurational elements separately, and combining the formed configurational elements.

Other objects and features of the present invention will be apparent to those skilled in the art upon reading the following description with reference to the attached drawings.

## BRIEF DESCRIPTION OF THE DRAWINGS

Fig. 1 is a perspective side view of a chocolate confection having a rose flower shape according to the present invention.

Fig. 2 is a perspective side view showing the confection shown in Fig. 1 divided into three configurational elements.

Fig. 3 is a vertical sectional view showing the confection shown in Fig. 1 with a portion cut away.

Fig. 4 is a vertical sectional view showing a conventional chocolate confection of a rose flower shape formed integrally with a portion cut away.

## DESCRIPTION OF THE PREFERRED EMBODIMENTS

In the present invention, an object having a three-dimentional shape such as a flower, a fruit or an animal which is intended to be formed as a confection is divided into plural configurational elements. Each configurational element has a part of the outside configuration of the above object.

Shown in the drawings is a chocolate confection 1 of a rose flower shape having various petals multiply overlapped each other. The confection is classified into three configurational elements of a circumferential petal section 2, an intermediate petal section 3 and a center-of-flower section 4. The circumferential petal section 2 has plural pieces of petals 5 having a complicated, reverse-taper shape which is largely recurved toward the outside. These are integrated at the lower portion thereof, and have a shape just like a cup. The intermediate petal 3 next thereto has a shape of a petal 6 being similar thereto. The shape is like a cup smaller than the circumferential petal section2. The intermediate petal section 3 is fitted in a concave section 7 of the circumferential petal section 2. Between the concave section 7 and the intermediate petal section 3, a space 9 extending deeply from the upper periphery toward the lower portion. The intermediate petal section contacts with the concave section 7 at a lower section 8. The center-of-flower section 4 constitutes a solid body having a petal 10 at the upper portion and a lower section 11 which is substantially sphere-like shape. The center-of-flower section 4 is fitted in a concave section 12 of the intermediate petal section 3.

Between the concave section 12 and the center-of-flower section 4, a space 13 extending deeply from the upper periphery toward the lower portion is formed similarly as the above. The center-of-flower section contacts with the concave section 12 at the lower portion 11.

The configurational elements of the respective petals and the like divided as above are formed separately. These can be formed by means of a solid-like or sheet-like mold made of a plastic such as urethane resin or a vinyl chloride resin which is full in elasticity and deformable. A rigid mold which is not deformable can be used depending on the shapes of the configurational elements. Since the confection is formed separately as the respective configurational elements, the formation can be made more easily and precisely than the whole body is formed by means of one mold, and a rose flower being full of variety can be obtained as described below.

Into the concave section 7 of the circumferential petal section 2 of the formed configurational elements, the intermediate petal section 3 is fitted. Then, the center-of-flower section 4 is fitted into the concave section 12 of the intermediate petal section to complete the rose flower 1. In this rose flower, each of the petals is largely recurved toward the outside. Between the configurational elements constituting respective petal sections, spaces 9 and 13 extending deeply from the upper periphery toward the lower portion are formed. Those obtained by the above manner have shapes which are well-defined, full of cubicity, complicated and precise which can not be obtained when the whole body is integrally formed.

When the respective configurational elements are combined, if a little amount of melted chocolate or the like (not shown in the drawing) treated by tempering is poured into the concave section 7 of the circumferential petal section, and the intermediate petal section 3 is inserted thereinto, the both can be integrated at the lower section 8. Also, the intermediate petal section 3 and the center-of-flower section 4 can be integrated in the same manner. Since the jointed parts between the respective configurational elements are not seen from the outside, the combined configuration is still more excellent in appearance. If the elements are lightly integrated by using a small amount of the chocolate or the like, the confection can easily be separated into respective configurational elements. By the above manner, this confection is made thin in thickness and can easily be eaten as compared with a chocolate confection totally formed into a solid block-like shape. When the confection of rose flower is packed in a box for selling, it is not necessary to use chocolate for jointing, since the combined configurational elements of the respective petal sections are not separated into pieces even if these are only fitted each other.

In the above-mentioned example, the one intermediate petal section is used. However, the confection can be made in further complicated shape by forming two or more intermediate petal sections.

When this flower is formed by using chocolate, since chocolates of different colors can be used. For example, a usual chocolate having a so-called chocolate color derived from cacaomass, a white chocolate which contains cacao butter and dry milk as main raw materials, chocolates having various colors which are colored by adding appropriate coloring agents to the white chocolate, and the like, roses of many colors such as a red rose or a cream-color rose can be produced. In addition, by combining configurational elements of different colors, the colors are not mixed and the borderline of the colors is not made indefinite, unlike the conventional case that two chocolates of different colors are deposited in one mold. Thus colours become definite and further roses full in variety can be obtained.

Such a confectionery can widely be applied to the production of confectionery of various objects having three-dimensional configurations such as various flowers in addition to the above rose flower, fruits such as pineapple having a fruit of an irregular surface and leaves, or animals. As the raw material for the confectionery, various materials for the production of confectionery in addition to the chocolate which are easily formed, for example, a material for candy, magipan and the like can be used. Also, this invention can be applied to the case where various configurations are produced without using a mold.

**Claims**

1. A confection having a three-dimensional configuration formed into a shape of an object such as a flower, an animal or the like,
   wherein the configuration of the object comprises plural configurational elements, the configurational elements each partially have a part of the configuration of the object,
   the plural configurational elements are formed separately by using a confectionary material which is easily formed such as a chocolate or the like, and
   the plural configurational elements are formed into shapes which is combinable to form the configuration of the object.

2. The confection according to Claim 1, wherein the confection has a configuration of a rose, the configuration comprises plural configurational elements, the plural configurational elements comprise a circumferential petal section having plural petals which are formed integrally at the lower portion thereof, at least one intermediate petal section having plural petals which are integrally formed at the lower portion thereof, and a center-of-flower section located at the center portion of the flower, these sections are formed so that the intermediate petal section is fitted inside the circumferential petal section and the center-of-flower section is fitted inside the intermediate petal section in succession.

3. The confection according to Claim 1 or 2, wherein the plural configurational elements constituting the configuration of the object are colored in differenct colors.

4. A method for producing a confection which comprises forming separately plural configurational elements which constitute a three-dimensional configuration having a shape of an object such as a flower, an animal or the like, by using a material for production which is easily formed such as a chocolate or the like, where the configurational elements each have a part of the configuration of the object at a part thereof,
combining the formed configurational elements to form the configuration of the object by assembling the parts of the outside configuration of the object retained in the configurational elements.

5. The method for producing a confection according to Claim 4, wherein the plural configurational elements are formed by means of molds respectively.

# FIG. 1

# FIG. 2

# FIG. 3

# FIG. 4

European
Patent Office

EUROPEAN SEARCH
REPORT

Application Number

EP 91 11 0067

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 803 202  (L.O. SCHAFER)<br>* Figures 4-8; column 1, line 15 - column 2, line 5 *<br>– – – | 1-5 | A 23 G 3/28<br>A 23 G 3/00 |
| X | US-A-2 901 851  (L.O. SCHAFER)<br>* The whole document *<br>– – – | 1-5 | |
| A | US-A-4 599 235  (J.V. MILLER et al.)<br>* Figures 1-8; column 1, lines 7-24; claims 1-22 *<br>– – – | 1 | |
| A | FR-A-1 129 141  (E. CAMBIER)<br>– – – | | |
| A | FR-A-1 456 064  (E. CAMBIER)<br>– – – – – | | |

|  |  |  | TECHNICAL FIELDS SEARCHED (Int. Cl.5) |
|---|---|---|---|
| | | | A 23 G |

The present search report has been drawn up for all claims

| Place of search | Date of completion of search | Examiner |
|---|---|---|
| The Hague | 05 September 91 | GUYON R.H. |